# EUROPEAN PATENT APPLICATION

(11) **EP 2 543 779 A2**
(43) Date of publication of application: **09.01.2013**
(21) Application number: 12175217.4
(22) Date of filing: 05.07.2012
(51) Int. Cl.: E03B 7/07

(54) **A water mixing system, a sanitary fitting, a bath filling system and a system for selectively introducing an additive into a water stream**

(30) Priority: 07.07.2011 NZ 59394011
(71) Applicant: Markon Holdings Limited, Glendene, Auckland 0602 (NZ)
(72) Inventor: Marks, Kipley Roydon, Auckland 1071 (NZ)
(74) Representative: Ahmad, Sheikh Shakeel

(57) **Abstract**

A water mixing system for a bathroom fixture comprising a conduit having a hot water inlet, a cold water inlet, and an outlet, is described. The system further comprises a flow controller for controlling the flow rates of water entering the conduit through the hot and cold water inlets, a temperature sensor provided downstream of the flow controller and upstream of the outlet, and a system controller which receives a signal from the temperature sensor and controls the flow controller in order to adjust the flow rates of hot and cold water in use, so that the combined water flows have a required temperature at the outlet. The hot water inlet and cold water inlet are provided with solenoid operated shut-off valves which are normally closed.

## Description

The present invention relates to systems and apparatus for controlling water flows into and/or out of a bath, shower or other similar bathroom fixture.

### Background

Manually filling a bath can be a time consuming operation. While the bath is filling both the level of the water in the bath and the temperature of the water must be constantly monitored. With moves towards increasing automation in the home, it would be advantageous to provide a means for filling a bath automatically without the need to monitor the bath during the filling operation.

Another trend in bathroom fixtures is the emergence of electronic thermostatic control of water temperature. Such controllers often use motor driven valves to regulate the flow of hot and cold water into a mixing tube which is in communication with the bathroom fixture outlet. A problem with such systems is the requirement for a battery backup for the motor operated valves, so that the water flow can be shut off in the event of a power cut. However, backup batteries are prone to failure over time.

A further problem is the need to clean the bathroom fixtures. Although cleaning agents have been developed which are effective in removing soap residues and the like without the need for the surface to be scrubbed, these sprays must be applied manually, and may be corrosive or otherwise unpleasant to use.

US patent application publication No.2012/018000 discloses a system for adding a perfumed additive to the water supplied to a shower head. However, there is no disclosure of a system for cleaning the shower.

US patent application publication No.2011/0099711 discloses an actuator operated draining system for a bathroom fixture. However, the sealing portion of the system is located within the interior volume of the fixture, while the actuator is located below the fixture. This means that the driving mechanism must be adjusted during installation to suit the thickness of the lower wall of the fixture.

### Object of the Invention

It is one object of the present invention to provide a water mixing system for a bathroom fixture which will overcome or ameliorate at least one problem associated with the prior art, or to at least provide the public with a useful choice.

It is a further objection of the present invention to provide a bath filling system which will overcome or ameliorate at least one problem associated with the prior art, or to at least provide the public with a useful choice.

It is a further objection of the present invention to provide a method of operating a bath filling system which will overcome or ameliorate at least one problem associated with the prior art, or to at least provide the public with a useful choice.

It is a further objection of the present invention to provide a method of operating a shower water supply which will overcome or ameliorate at least one problem associated with the prior art, or to at least provide the public with a useful choice.

It is a further objection of the present invention to provide a method of operating a water mixing system for a bathroom fixture which will overcome or ameliorate at least one problem associated with the prior art, or to at least provide the public with a useful choice.

The above objects are to be read disjunctively, and with the alternative object of at least providing the public with a useful choice.

Other objects of the present invention may become apparent from the following description, which is given by way of example only

### Brief Summary of the Invention

According to one aspect of the present invention there is provided a water mixing system for a bathroom fixture comprising a conduit having a hot water inlet, a cold water inlet, and an outlet, the system further comprising a flow controller for controlling the flow rates of water entering the conduit through the hot and cold water inlets, a temperature sensor provided downstream of the flow controller and upstream of the outlet, and a system controller which receives a signal from the temperature sensor and controls the flow controller in order to adjust the flow rates of hot and cold water in use, so that the combined water flows have a required temperature at the outlet, wherein the hot water inlet and cold water inlet are provided with solenoid operated shut-off valves which are normally closed.

Preferably the water mixing system comprises a bath filling system.

Preferably the water mixing system comprises a shower water supply system.

Preferably the water mixing system also comprises a shower water supply system, wherein the conduit comprises a second outlet and a diverter valve downstream of the temperature sensor for selectively diverting water from the outlet to the second outlet.

Preferably the flow controller comprises a flow control member with:
- a first flow control member inlet provided in a wall of the flow control member;
- a second flow control member inlet provided in a wall of the flow control member and spaced from the first control member inlet; and
- either a combined flow control member outlet or respective flow control member outlets in fluid communication with first and second flow control member inlets and the conduit outlet;
wherein the shape and configuration of the hot and cold water inlets and of the first and second flow control member inlets is such that movement of the flow control member varies the cross-sectional area available for fluid flow through of one of said flow control member inlets and maintains the cross-sectional area available for fluid flow through the other of said member inlets, at least through a portion of an available range of movement of the member.

Preferably the water mixing system comprises a container for a liquid additive, an additive conduit having an inlet in fluid communication with the container and an outlet in fluid communication with an area of a static pressure reducing formation through which the water stream flows in use, and a switchable vacuum release mechanism in fluid communication with the additive conduit.

Preferably the switchable vacuum release mechanism is operable to introduce ambient air into the additive conduit.

Preferably the switchable vacuum release mechanism comprises a normally open solenoid operated valve.

Preferably the static pressure reducing formation comprises a venturi.

According to a second aspect of the present invention there is provided a bath filling system comprising the water mixing system of the first aspect in combination with a pressure sensor having an inlet located, in use, at or below a base of the bath, and in fluid communication with an interior of the bath, for sensing a depth of water in the bath.

Preferably the system controller closes the solenoid operated shutoff valves when the pressure sensor indicates that the water in the bath has reached a preselected depth.

According to a third aspect of the present invention there is provided a bath filling system of the second aspect in combination with an outlet fitting for the bath, wherein the outlet fitting comprises:
- a body defining an outlet conduit therein, the outlet conduit having an inlet and an outlet;
- a moveable sealing member for selectively sealing against a seat portion to thereby seal the conduit;
- an actuator for moving the moveable sealing member relative to the seat portion between a sealed position and an open position;
- mounting means for mounting the outlet fitting to a wall of the bath, wherein the outlet conduit inlet is, in use, in fluid communication with an internal volume of the bath;
- and wherein the pressure sensor is connected to the outlet fitting and is in fluid communication with the outlet conduit inlet.

According to a further aspect of the present invention there is provided a method of operating a bath filling system having a conduit having a hot water inlet, a cold water inlet, and an outlet, the system further comprising a flow controller for controlling the flow rates of water entering the conduit through the hot and cold water inlets, a temperature sensor provided downstream of the flow controller and upstream of the outlet, and a system controller which receives a signal from the temperature sensor and controls the flow controller in order to adjust the flow rates of hot and cold water in use, so that the combined water flows have a required temperature at the outlet, wherein the hot water inlet and cold water inlet are provided with solenoid operated shut-off valves which are normally closed, the system further having a pressure sensor, the pressure sensor having an inlet located, in use, at or below a base of the bath, and in fluid communication with an interior of the bath, for sensing a depth of water in the bath,
the method comprising the steps of:
i) Receiving a signal to begin filling the bath;
ii) operating the actuator to seal the outlet fitting;
iii) opening the solenoid operated valve at the hot water inlet,
iv) monitoring the temperature of water flowing through the conduit;
v) opening the solenoid operated valve at the cold water inlet when a time averaged temperature of the water which passes the temperature sensor is equal to a predetermined temperature;
vi) controlling the temperature of the out flowing water; and
vii) closing the solenoid operated valves at the hot and cold inlets when the pressure sensor indicates that the depth of water in the bath has reached a predetermined depth.

A method of operating a shower water supply of the first aspect comprising the steps of:
i) Receiving a signal to begin a shower preconditioning cycle;
ii) opening the solenoid operated valve at the hot water inlet;
iii) monitoring the temperature of water flowing through the conduit;
iv) closing the solenoid operated valve at the hot water inlet when the temperature sensor indicates that the temperature of the water in the conduit is system is at the predetermined temperature;
v) creating an audible and/or visual alert signal; and
vi) on instruction, opening both solenoid valves and thereon controlling the temperature of the out flowing water.

According to another aspect of the present invention there is provided a method of operating a water mixing system for a bathroom fixture comprising a conduit having a hot water inlet, a cold water inlet, and an outlet, the system further comprising a flow controller for controlling the flow rates of water entering the conduit through the hot and cold water inlets, a temperature sensor provided downstream of the flow controller and upstream of the outlet, and a system controller which receives a signal from the temperature sensor and controls the flow controller in order to adjust the flow rates of hot and cold water in use, so that the combined water flows have a required temperature at the outlet, wherein the hot water inlet and cold water inlet are provided with solenoid operated shut-off valves which are normally closed, and a container for a liquid additive, an additive conduit having an inlet in fluid communication with the container and an outlet in fluid communication with an area of a static pressure reducing formation through which the water stream flows in use, and a switchable vacuum release mechanism in fluid communication with the additive conduit, the method comprising the steps of:
i) Determining that a cleaning cycle should be implemented;
ii) Opening at least one of the solenoid operated shut-off valves;
iii) Closing the switchable vacuum release mechanism;
iv) Closing the opened solenoid valve(s) after a predetermined period of time has elapsed since the switchable vacuum release mechanism was closed;
v) Opening the switchable vacuum release mechanism.

Preferably the method comprises the further steps of:
vi) Opening at least one of the solenoid operated shut-off valves after a predetermined delay time has elapsed since step iv);
vii) Closing the at least one solenoid valve opened in step vi) after a predetermined rinse-off time has elapsed since step vi).

The invention may also be said broadly to consist in the parts, elements and features referred to or indicated in the specification of the application, individually or collectively, in any or all combinations of two or more of said parts, elements or features, and where specific integers are mentioned herein which have known equivalents in the art to which the invention relates, such known equivalents are deemed to be incorporated herein as if individually set forth.

According to a still further aspect of the present invention, a sanitary outlet fitting and/or a bathroom fixture filling apparatus and/or a water mixing system and/or a bath filler system and/or a system for selectively introducing an additive into a water stream is substantially as herein described, with reference to any one or more of the accompanying drawings.

Further aspects of the invention, which should be considered in all its novel aspects, will become apparent from the following description given by way of example of possible embodiments of the invention.

### Brief Description of the Drawings

- Figure 1:: is a diagrammatic cross-section side view of a sanitary outlet fitting according to one aspect of the present invention.
- Figure 2:: is a schematic diagram of a combined water mixing and bath filler system according to one aspect of the present invention.
- Figure 3:: is a diagrammatic cross-section side view of the combined water mixing and bath filler system of Figure 2, with the shower head not shown.
- Figure 4:: is a perspective view of a flow control member.
- Figure 4A:: is a schematic diagram showing the relative shape and position of the flow controller inlets of the flow control member of Figure 4.
- Figure 4B:: is a perspective view of an alternative flow control member.
- Figure 4C:: is a schematic diagram showing the relative shape and position of the flow controller inlets of the flow control member of Figure 4B.
- Figure 5:: is a diagrammatic cross-section side view of a second embodiment of a water mixing system provided with an automatic cleaning system of the present invention.

### Brief Description of Preferred Embodiments

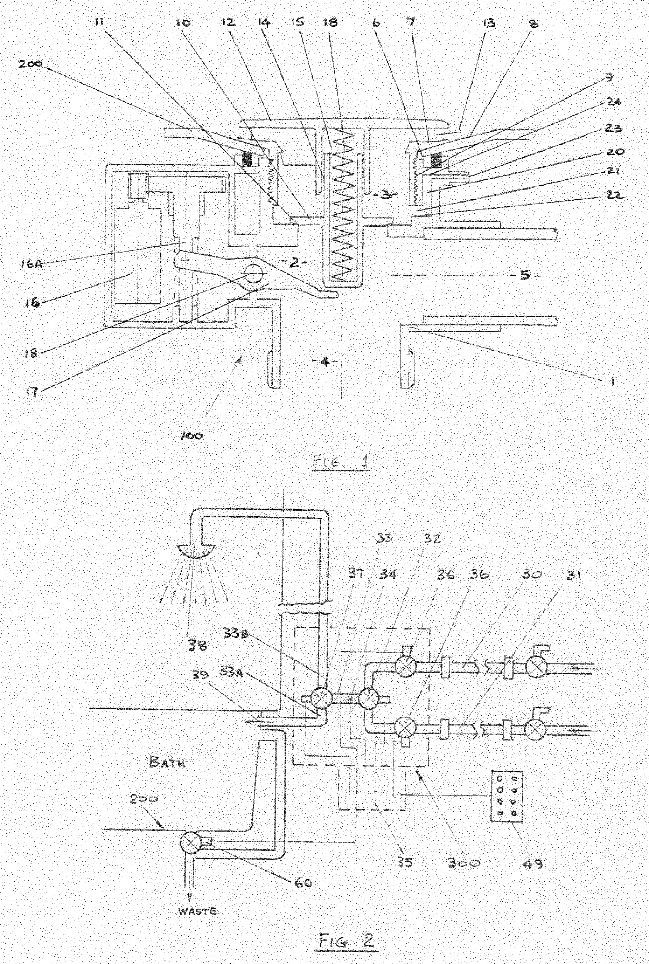

Referring first to Figure 1, a sanitary wastewater outlet fitting is generally referenced by arrow 100.

The fitting 100 comprises a body 1 having an internal conduit 2 comprising a first inlet 3 and an outlet 4. In the embodiment shown, the conduit 2 also has a second inlet 5, which may be connected to an overflow inlet, as is described further hereinbelow.

The fitting 100 is connected to an outlet aperture 6 of a bath 200 or other similar bathroom fixture, and is substantially located, in use, outside the bath, that is, outside the volume of the bath 200 which is to be filled with water in use (the "interior volume"). In a preferred embodiment the main body of the fitting 100 is located in use beneath a base or floor of the bath 200.

As can been seen from Figure 1, in a preferred embodiment the outlet fitting 100 comprises a retainer 7 adapted to extend through the bath outlet aperture 6 and contact an inner surface 8 of the base of the bath 200, to thereby mount the fitting 100 to the bath. The retainer 7 is preferably connected to the internal conduit 2 by means of complimentary threaded portions 9, although in some embodiments other connection means, such as interference or snap-fit type connections, may be used.

A valve member 10 is provided to selectively engage or disengage with a seat portion 11 and thereby seal the first inlet 3 from the outlet 4. The configuration of the conduit 2 is such that the seat portion 11 is mounted to the body 1, rather than the retainer 7, and so is located outside the bath 200 in use, rather than inside the bath.

A cover member 12 is preferably provided to cover the retainer 7 and the inlet 3. The cover member is preferably provided with a plurality of apertures 13, which are preferably radially spaced around the outer edge of the cover member 12, which allow fluid communication between the interior volume of the bath and the valve member 10. The cover member 12 is preferably engaged with the retainer 7 by a snap fit, thread or similar.

Unlike many systems of the prior art, the cover member 12 plays no part in sealing the outlet aperture of the bath, and preferably does not move when the valve member 10 moves between an open position and closed position. The radial apertures 13 preferably remain open at all times.

In one embodiment the valve member 10 includes a stem portion 14 which is slideably engaged with a guide portion 15 provided in the bottom of the cover means 12. The length of the stem portion 14 and guide portion 15 are preferably selected to be sufficiently long that the stem 14 is engageable with the guide portion regardless of the thickness of the base of the bath, provided the thickness of the base is within the normal range of between around 2 mm-10 mm.

The valve member 10 may be moved relative to the seat portion 11 by any suitable means. In the embodiment shown an electric actuator 16 (in this case a rotary actuator) is configured to move the valve member 10 by means of a rocker arm 17. The actuator 16 turns a threaded rod 16A. A travelling nut (not shown) is threadingly engaged with the threaded rod 16A and moves the end of the rocker arm 17 up or down with rotation of the threaded rod 16A. The pivot 18 of the rocker arm 17 is provided with a seal to prevent water ingress into the actuator 16. In the embodiment shown the valve member stem portion 14 is hollow and a return spring 18 is provided within the stem portion 14 which bears against the cover member 12 and biases the valve member 10 downward towards the closed position in order to increase the sealing load.

In a preferred embodiment the fitting 100 further comprises a chamber 20. The chamber 20 is provided with an inlet 21 at or adjacent a lower surface 22 of the chamber. The inlet 21 is in fluid communication with the portion of the conduit 2 between the inlet 3 and the valve seat portion 11, so that the inlet is always in fluid communication with the internal volume of the bath 200, regardless of whether the valve member 10 is in the open or closed position.

The chamber 20 has an outlet 23 provided at or adjacent an upper surface 24 of the chamber 20. In use, a pressure sensor (not shown in Fig 1) may be connected to the outlet (via a tube or similar if required). By providing the inlet 21 at or near the bottom of the chamber 20 and the outlet 23 at or near the top of the chamber 20, a pocket of air is trapped in the chamber 20. The trapped air pocket prevents water from entering the pressure sensor or the outlet 23, and is preferably of sufficiently large diameter (for example around 10mm or greater) that bubbles cannot form in the chamber. This assists in maintaining the accuracy of the measurement taken by the pressure sensor.

The pressure sensor may be provided as a component of the fitting 100, or it may be remote from the fitting.

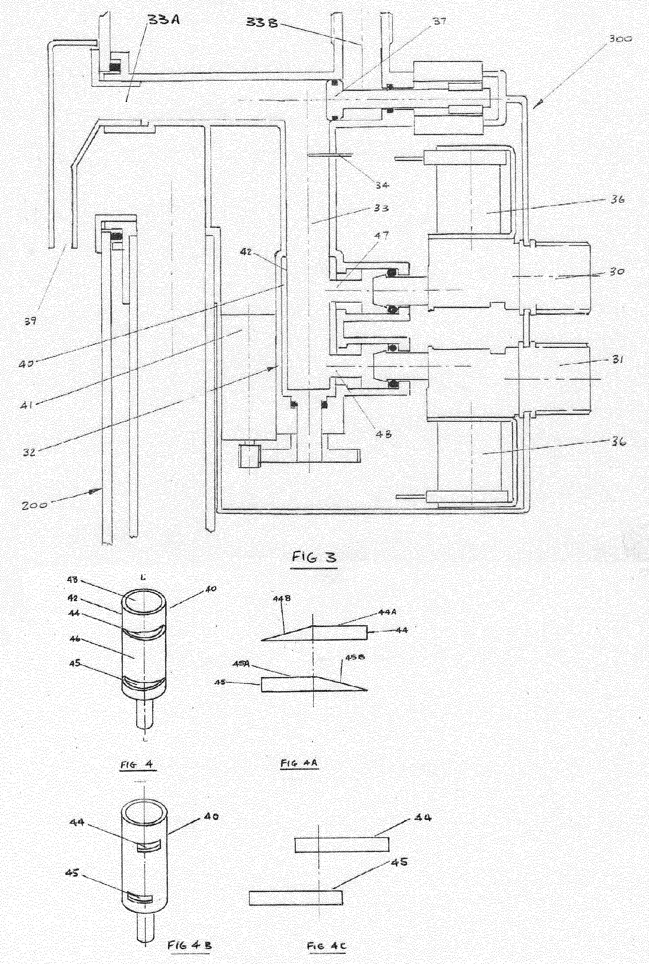

Referring next to Figures 2 and 3, a combined water mixing and bath filler system is generally referenced by arrow 300.

The system comprises a hot water inlet pipe 30 and a cold water inlet pipe 31, the hot and cold inlet pipes connected to a flow controller 32 for controlling the flow rates of hot and cold water entering a mixing conduit 33.

The mixing conduit 33 is provided with a temperature sensor 34, such as a thermocouple.

An electric or electronic system controller 35 receives a signal from the temperature sensor 34, and adjusts the flow controller 32 such that the combined flow over the temperature sensor 34 is at a required temperature. The system controller 35 may be any suitable computer or microprocessor based apparatus, such as will be familiar to those skilled in the art.

The system 300 comprises shut-off valves 36 provided in the inlet pipes 30, 31. The shut-off valves are preferably "normally closed" solenoid operated valves, that is, valves which are biased to automatically close if the supply of electrical current is interrupted. In this way the system 300 automatically shuts off the flow of water in the event that power is cut, without the need for a battery backup system.

In a preferred embodiment the shut-off valves 36 are not operated as part of the water temperature control strategy that is, they remain fully open when a flow of water is required, and close when a water flow is no longer required, or if the power supply is interrupted. However, in some embodiments only one valve may be opened during a temperature conditioning cycle, as is described further below.

In the embodiment shown, the system 300 includes a diverter valve 37 which is operable to selectively direct water from the mixing conduit 33 to one of the first and second outlets 33a, 33b, from which the water can flow to a shower head 38 or an outlet spout 39.

Referring next to Figures 3 and 4, the flow controller 32 comprises a flow control member 40 connected to a suitable actuator 41. In a preferred embodiment, the flow control member 40 has a substantially cylindrical portion 42 having an internal channel 43, and a first inlet 44 and second inlet 45 to the channel 43 provided in the side wall 46 of the cylindrical portion 42. The first and second inlets 44, 45 are spaced apart along the longitudinal axis of the cylindrical portion 42, the spacing corresponding to that between first and second inlet ports 47, 48 to the mixing conduit 33. In the embodiment shown the first inlet port 47 is used for hot water and the second inlet port 48 for cold water.

As is best seen in Figures 4 and 4A, in one embodiment each inlet 44, 45 may comprise a section of constant height 44A, 45A, and a section which varies along the circumferential direction of the cylindrical portion 44B, 45B. The height variation of one of the inlets 44, 45 is the opposite or reverse image of the variation of the other of the inlets 44, 45.

The inlets 44, 45 are arranged such that rotation of the substantially cylindrical portion 42 about the longitudinal axis L-L varies the cross-sectional area available for fluid flow through one of the channel inlets while maintaining the cross-sectional area available for fluid flow through the other of the channel inlets. In this way the flow controller 32 may vary the proportion of hot water to cold water flowing into the mixing conduit 33 while maintaining the maximum possible total flow rate, at least over a portion of the available range of rotation. By varying one of the inlets 44, 45 while keeping the other substantially constant, the change in temperature per unit of rotation of the flow controller 32 is minimised, reducing the sensitivity of the system and increasing its stability.

In some embodiments (not shown) the sections of varying height 44B, 45B may have a small amount of overlap.

In an alternative embodiment (not shown) the sections of constant height 44A, 45A may be minimal, or omitted entirely, and the inlets 44, 45 shaped and configured such that rotation of the cylindrical portion increases the cross-sectional area available for fluid flow through one of the channel inlets and decreases the cross-sectional area available for fluid flow through the other of the channel inlets. In this embodiment the total flow rate may be kept substantially constant regardless of the temperature of the water. However, the total flow rate will always be less than the maximum possible flow rate, and the system may be more prone to temperature instability.

In a more preferred embodiment the sections of varying height may be omitted, as shown in Figures 4B and 4C. As can be seen in the Figures, particularly Figure 4C, the sections of constant height preferably overlap each other.

In still further embodiments (not shown), the flow control member 40 may be in the form of a partially cylindrical mask or baffle, rather than a full cylinder. In other embodiments the flow control member may be a substantially planar mask or baffle, and may move longitudinally to alter the area available for flow, rather than rotating.

In a preferred embodiment the system comprises the wastewater outlet fitting of Figure 1.

The operation of a such preferred embodiment of the system 300 is as follows.

Referring next to Figures 1-3, when a user wishes to take a bath, he or she enters the required temperature and depth of the bath water into the system controller 35 via a control panel 49 (see Figure 2). In a preferred embodiment the system controller 35 may have a "preset" function which allows one or more preferred combinations of temperature and water depth to be stored and recalled. The system controller 35 may also keep a record of the last used combination of temperature and water depth in a memory option as a default setting.

When the user indicates that the bath should begin filling, the system controller 35 activates actuator 16 to move the valve member 10 to its closed position, and begins to fill the bath 200 with water via the outlet spout 39. The system controller 35 controls the temperature of the water filling the bath.

In a preferred embodiment the system controller implements a method of compensating for the residual water present in the system before the filling process starts. The system controller 35 may open the hot water solenoid valve only, leaving the cold water solenoid valve closed. The system controller monitors the temperature of the water flowing through the mixing conduit 33 over time. When the time averaged temperature of the water which has passed across the temperature sensor 34 (being initially the cold water originally resident in the apparatus and its associated supply pipework, combined with the subsequent hot water) is equal to the required or set temperature, the cold water solenoid is opened and flow through the apparatus is then maintained at the required temperature.

The system controller 35 receives a signal from the pressure sensor 60 which is indicative of the depth of the bath, and closes the shut-off valves 36 when the signal indicates that the required depth has been reached. In a preferred embodiment the system controller 35 may also activate an audible and/or visual signal to indicate that the bath is filled and ready for use. In a preferred embodiment the signal may automatically cease once the user enters the bath. The system controller 35 may sense that the user has entered the bath through the increase in water level in the bath, and consequent pressure increase measured by the pressure sensor 60.

Once the user indicates that they have finished using the bath, for example by pressing a button or by leaving the bath (which can be detected by the pressure sensor), the system controller 35 activates the actuator 16 (possibly after a predetermined delay, in case the user re-enters the bath) to open the valve member 10 and thereby allow the bath to drain.

When a user indicates that they wish to take a shower the system controller sets the diverter valve 37 to allow flow to the second outlet 33B, and may first open the shut-off valve 36 in the hot water inlet pipe 30. Once the temperature sensor 34 indicates that the water flowing into the system is at substantially the required temperature, the shutoff valve 36 may be closed and the system controller 35 may indicate that the shower is ready for use with an audible and/or visual signal. When the user indicates that they are ready to enter the shower, both shutoff valves 36 are opened and the user showers in the normal way. By performing a temperature conditioning cycle in this way, the user is not subjected to water which is too hot or too cold when stepping into the shower, and a minimum of water is wasted in adjusting the shower temperature to the required temperature.

In some embodiments the bath filling operation and/or the shower preconditioning system may operable by remote control from another part of the dwelling. The remote control may communicate with the system controller by any suitable known wireless or infra-red protocol, or it may have a hard-wired connection.

If the user delays entering the shower for a prolonged period after the preconditioning cycle has finished, and the temperature sensor 34 senses that the water temperature is outside a preset range, then the shower may repeat the temperature conditioning cycle. In a preferred embodiment the system controller may provide some type of audible and/or visual warning that a further temperature conditioning cycle is about to commence.

In another embodiment which is particularly suitable for use by the invalid, the bath 200 may be of the type which has a door provided in one of the side walls to allow a user to enter the bath without stepping over the side wall.

In some embodiments the system 300 may perform a temperature conditioning cycle, substantially as described above, before the user enters the bath and the bath begins to fill. In this way the water filling around the user may be kept at a comfortable temperature at all times.

In another embodiment (not shown), the system may fill a reservoir tank with a required volume of water which is at a required temperature for the bath. Once the tank is full, the water may be transferred to the bath, for example through the use of a high flowrate pump. In this way the time during which the user is sitting in the bath as it fills may be minimised. In one embodiment the bath may be filled with water from the reservoir tank and with water directly from the system 300 at the same time.

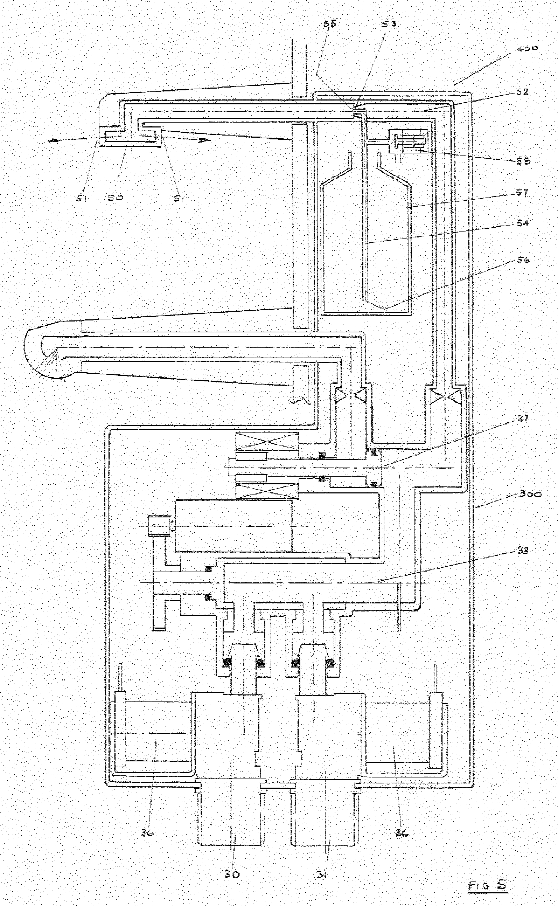

Referring next to Figure 5, the system 300 described above is provided with a system for automatically cleaning or pre-treating the bathroom fixture after use (hereinafter "cleaning system"), generally referenced by arrow 400.

The automatic cleaning system 400 includes a cleaning agent spray head 50 which comprises one or more spray nozzles 51. The spray head 50 is in fluid communication with at least one of the inlet pipes 30, 31, and preferably the mixing conduit 33 via a supply conduit 52.

A diverter valve 37 is provided to allow the supply of water to the supply conduit 52 to be controlled.

A venturi formation 53, or similar static pressure reducing formation (for example an orifice plate or similar), is provided in the supply conduit 52.

A cleaning agent conduit 54 is provided, with the conduit outlet 55 located in the venturi 53 in a position which will cause the pressure at the conduit outlet 54 to fall below atmospheric pressure when water is flowing in the supply conduit 52. The inlet 56 to the cleaning agent conduit 54 is locatable in a cleaning agent container 57 which, in use, contains a liquid cleaning agent.

The term "cleaning agent" is to be construed broadly, and includes (without limitation) preparations containing surfactants and/or antibacterial agents and/or anti microbial agents. The term is to be construed to include preparations such as "daily shower sprays" which are intended to pre-treat a surface to reduce formation of deposits and/or bacteria, as well as preparations intended to remove deposits and/or bacteria already resident on the surface.

The cleaning agent conduit 54 is in fluid communication with a vacuum release mechanism 58. The vacuum release mechanism 58 comprises a valve, preferably a solenoid operated air valve.

The operation of the automatic cleaning system 400 is as follows.

Once the user has finished having a shower he/she presses the "off" button on the control panel 49, whereupon both solenoid valves 36 close to shut off the water flow. After a predetermined delay to allow the user time to leave the shower enclosure and close the door, a controller (for example the system controller 35 described above) opens the diverter valve 37 which opens the flow path to the cleaning agent spray head 50. In some embodiments a sensor, for example a passive infrared (PIR) sensor, may be provided to confirm that the user has left the enclosure.

The controller operates either or both of the water solenoid valves 36 to create a water flow to the cleaning agent spray head 50. In a preferred embodiment both solenoid valves 36 are opened and the temperature of the water supplied to the spray head 50 is controlled.

The nozzles 51 in the spray head 50 are preferably directed towards the shower walls such that the walls are wetted when water flows through the spray head 50.

More than one spray head 50 may be provided, and the spray head or heads may be remote from the main shower head or may be integrated into the main shower head.

In some embodiments the spray head or heads 50 may be movable, such as by rotation or oscillation in order to ensure adequate wetting coverage of the shower walls.

When water flows to the spray head 50 it passes through the venturi 53, which creates a vacuum in the cleaning agent conduit 54. If the controller closes the vacuum release mechanism 58, the vacuum sucks cleaning agent from the container 57 into the water stream. If the controller opens the vacuum release mechanism 58 then the cleaning agent conduit 54 is open to atmosphere and air is sucked into the water stream, rather than cleaning agent fluid.

Different cleaning strategies may be employed depending on the nature of the cleaning agent used. In a preferred embodiment the controller first opens the vacuum release mechanism 58 to allow a fresh water rinse of the shower (or other bathroom fixture). The controller may then close the vacuum release mechanism 58 to allow a dilute mixture of the cleaning agent to be sprayed onto the surfaces to be cleaned. In some embodiments the cleaning agent is intended to be left on the surface, and so the cleaning cycle will end after the cleaning agent has been sprayed onto the surfaces. However, in other embodiments the cleaning agent may be rinsed off with fresh water, possibly after a predetermined delay to allow time for the cleaning agent to work.

The system may be provided with a suitable sensor to detect when the level of cleaning agent in the container 57 is low. The controller may alert the user by means of a suitable alert, for example a warning light. Suitable sensors for detecting the level of mixture in the container are known to those skilled in the art.

Unless the context clearly requires otherwise, throughout the description and the claims, the words "comprise", "comprising", and the like, are to be construed in an inclusive sense as opposed to an exclusive or exhaustive sense, that is to say, in the sense of "including, but not limited to".

Where in the foregoing description, reference has been made to specific components or integers of the invention having known equivalents, then such equivalents are herein incorporated as if individually set forth.

Although this invention has been described by way of example and with reference to possible embodiments thereof, it is to be understood that modifications or improvements may be made thereto without departing from the spirit or scope of the invention.

## Claims

1. A water mixing system for a bathroom fixture comprising a conduit having a hot water inlet, a cold water inlet, and an outlet, the system further comprising a flow controller for controlling the flow rates of water entering the conduit through the hot and cold water inlets, a temperature sensor provided downstream of the flow controller and upstream of the outlet, and a system controller which receives a signal from the temperature sensor and controls the flow controller in order to adjust the flow rates of hot and cold water in use, so that the combined water flows have a required temperature at the outlet, wherein the hot water inlet and cold water inlet are provided with solenoid operated shut-off valves which are normally closed.

2. The water mixing system of claim 1 wherein the water mixing system comprises a bath filling system.

3. The water mixing system of claim 1 wherein the water mixing system comprises a shower water supply system.

4. The water mixing system of claim 2 wherein the water mixing system also comprises a shower water supply system, wherein the conduit comprises a second outlet and a diverter valve downstream of the temperature sensor for selectively diverting water from the outlet to the second outlet.

5. The water mixing system of any one of claims 1 to 4 wherein the flow controller comprises a flow control member with:
- a first flow control member inlet provided in a wall of the flow control member;
- a second flow control member inlet provided in a wall of the flow control member and spaced from the first control member inlet; and
- either a combined flow control member outlet or respective flow control member outlets in fluid communication with first and second flow control member inlets and the conduit outlet;
wherein the shape and configuration of the hot and cold water inlets and of the first and second flow control member inlets is such that movement of the flow control member varies the cross-sectional area available for fluid flow through of one of said flow control member inlets and maintains the cross-sectional area available for fluid flow through the other of said member inlets, at least through a portion of an available range of movement of the member.

6. The water mixing system of any one of claims 1 to 5 comprising a container for a liquid additive, an additive conduit having an inlet in fluid communication with the container and an outlet in fluid communication with an area of a static pressure reducing formation through which the water stream flows in use, and a switchable vacuum release mechanism in fluid communication with the additive conduit.

7. The water mixing system of claim 6 wherein the switchable vacuum release mechanism is operable to introduce ambient air into the additive conduit.

8. The water mixing system of claim 6 or 7 wherein the switchable vacuum release mechanism comprises a normally open solenoid operated valve.

9. The water mixing system of claim 6, 7 or 8 wherein the static pressure reducing formation comprises a venturi.

10. A bath filling system comprising the water mixing system of claim 2, or any one of claims 5 to 9 when dependent on claim 2, in combination with a pressure sensor having an inlet located, in use, at or below a base of the bath, and in fluid communication with an interior of the bath, for sensing a depth of water in the bath.

11. The bath filling system of claim 10 wherein the system controller closes the solenoid operated shutoff valves when the pressure sensor indicates that the water in the bath has reached a preselected depth.

12. The bath filling system of claim 11 in combination with an outlet fitting for the bath, wherein the outlet fitting comprises:
- a body defining an outlet conduit therein, the outlet conduit having an inlet and an outlet,
- a moveable sealing member for selectively sealing against a seat portion to thereby seal the conduit,
- an actuator for moving the moveable sealing member relative to the seat portion between a sealed position and an open position,
- mounting means for mounting the outlet fitting to a wall of the bath, wherein the outlet conduit inlet is, in use, in fluid communication with an internal volume of the bath,
- and wherein the pressure sensor is connected to the outlet fitting and is in fluid communication with the outlet conduit inlet.

13. A method of operating the bath filling system of claim 10 comprising the steps of:
i) Receiving a signal to begin filling the bath;
ii) operating the actuator to seal the outlet fitting
iii) opening the solenoid operated valve at the hot water inlet,
iv) monitoring the temperature of water flowing through the conduit,
v) opening the solenoid operated valve at the cold water inlet when a time averaged temperature of the water which passes the temperature sensor is equal to a predetermined temperature,
vi) controlling the temperature of the water flow; and
vii) closing the solenoid operated valves at the hot and cold inlets when the pressure sensor indicates that the depth of water in the bath has reached a predetermined depth.

14. A method of operating the shower water supply of claim 3 comprising the steps of:
i) Receiving a signal to begin a shower preconditioning cycle;
ii) opening the solenoid operated valve at the hot water inlet,
iii) monitoring the temperature of water flowing through the conduit;
iv) closing the solenoid operated valve at the hot water inlet when the temperature sensor indicates that the temperature of the water in the conduit is system is at the predetermined temperature; and
v) creating an audible and/or visual alert signal.
vi) on instruction, opening both solenoid valves and thereon controlling the temperature of the outflowing water.

15. A method of operating the water mixing system of claim 6, wherein the additive container contains a liquid cleaning agent, the method comprising the steps of:
i) Determining that a cleaning cycle should be implemented;
ii) Opening at least one of the solenoid operated shut-off valves
iii) Closing the switchable vacuum release mechanism;
iv) Closing the opened solenoid valve(s) after a predetermined period of time has elapsed since the switchable vacuum release mechanism was closed;
v) Opening the switchable vacuum release mechanism.

16. The method of claim 15 further including the step of :
vi) Opening at least one of the solenoid operated shut-off valves after a predetermined delay time has elapsed since step iv);
vii) Closing the at least one solenoid valve opened in step vi) after a predetermined rinse-off time has elapsed since step vi).
